(19) Europäisches Patentamt
European Patent Office
Office européen des brevets

(11) **EP 4 653 933 A1**

(12) **EUROPEAN PATENT APPLICATION**
published in accordance with Art. 153(4) EPC

(43) Date of publication:
**26.11.2025 Bulletin 2025/48**

(21) Application number: **23922916.4**

(22) Date of filing: **11.12.2023**

(51) International Patent Classification (IPC):
*G02B 21/14* (2006.01)     *G01N 21/17* (2006.01)
*G01N 21/45* (2006.01)     *G02B 21/00* (2006.01)

(52) Cooperative Patent Classification (CPC):
G01N 21/17; G01N 21/45; G02B 21/00;
G02B 21/14

(86) International application number:
**PCT/JP2023/044309**

(87) International publication number:
**WO 2024/171583 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2023 JP 2023023359**

(71) Applicant: **Hamamatsu Photonics K.K.
Hamamatsu-shi, Shizuoka 435-8558 (JP)**

(72) Inventors:
• **YASUHIKO Osamu
Hamamatsu-shi, Shizuoka 435-8558 (JP)**
• **TAKEUCHI Kozo
Hamamatsu-shi, Shizuoka 435-8558 (JP)**
• **YAMADA Hidenao
Hamamatsu-shi, Shizuoka 435-8558 (JP)**

(74) Representative: **Hoffmann Eitle
Patent- und Rechtsanwälte PartmbB
Arabellastraße 30
81925 München (DE)**

(54) **OBSERVATION DEVICE AND OBSERVATION METHOD**

(57)      An observation apparatus 1A includes a light source 10, an irradiation unit 31, an imaging unit 50, and a processing unit 60. The irradiation unit 31 inputs spatially coherent light output from the light source 10, generates first light and second light from the input light, and irradiates an observation object S with the first light and the second light in an overlapping manner. The irradiation unit 31 irradiates the observation object S with the first light along a fixed light irradiation direction, and irradiates the observation object S with the second light along each of a plurality of light irradiation directions. The imaging unit 50 receives both the first light and the second light, and captures an interference intensity image generated by interference between the first light and the second light. The processing unit 60 performs required processing based on the interference intensity image to generate a complex amplitude image and the like. Thus, an observation apparatus capable of reducing influence of multiple scattered light and easily observing an observation object even in the case in which the observation object is a multiple scattering object is realized.

**Fig.1**

## Description

### Technical Field

The present disclosure relates to an observation apparatus and an observation method.

### Background Art

In recent years, a technique for producing a three-dimensional cell tissue called a spheroid or an organoid has been developed. Further, a study for applying the above three-dimensional cell tissues to drug development, regenerative medicine, and the like has been developed. The above three-dimensional cell tissue is an optically transparent multiple scattering object. As a technique for imaging the optically transparent scattering object, various methods have been proposed.

In these techniques, examples of an imaging technique using a fluorescent probe include a confocal microscope, a multiphoton microscope, and a light sheet microscope. In addition, as a non-staining and non-invasive imaging technique without using the fluorescent probe, optical coherence tomography (OCT) or the like is known.

The non-staining and non-invasive imaging is often desired for an observation object such as the spheroid or the organoid, however, there are not many reports in which the OCT has been applied to the imaging of the above observation object. The reason may be that a resolution of the imaging by the OCT is low, and it is difficult to interpret a signal obtained by the imaging by the OCT. Therefore, it can be said that the non-staining imaging technique for the three-dimensional cell tissue which can be a gold standard has not been established at the present stage.

A quantitative phase imaging (QPI) is also known as a technique capable of imaging an optical path length of the observation object in a non-staining and non-invasive manner. The QPI can acquire physical information such as the optical path length of the observation object (for example, a cell), and thus, application of the QPI is progressing in a biological field. Images acquired by the QPI can be used to generate other types of images, such as a differential interference image and a phase contrast microscope image.

The QPI is a technique capable of acquiring an image having a relatively large amount of information, and is expected to be applicable to a higher content analysis than a conventional analysis using a bright field image. Further, the high content analysis using the non-staining imaging technique has been actively studied due to improvement in image recognition accuracy by machine learning in recent years, and the non-staining imaging of the multiple scattering object is expected to play an important role in the future. However, the QPI cannot grasp a true three-dimensional structure because the acquired image is merely a two-dimensional projection of the optical path length.

Further, optical diffraction tomography (ODT) described in Patent Document 1 is also known as a technique capable of imaging the optical path length of the observation object in a non-staining and non-invasive manner. The ODT is a development of the QPI into a technique capable of three-dimensional imaging, and can realize three-dimensional refractive index tomography of the observation object.

Performing cell observation using the ODT enables identification of organelles such as cell nuclei and mitochondria, and further, enables tracking of three-dimensional structural changes, and is expected to enable higher content analysis than the QPI. Further, a technique described in Patent Document 2 can also realize the three-dimensional refractive index tomography of the observation object.

### Citation List

### Patent Literature

Patent Document 1: Japanese Patent Application Laid-Open Publication No. 2017-219826
Patent Document 2: US Patent No. 10215697

### Summary of Invention

### Technical Problem

In the conventional techniques including the techniques described in Patent Documents 1 and 2, light output from a light source is split into two light beams, one split light passed through the observation object is set as object light, the other split light without passing through the observation object is set as reference light, and an interference intensity image generated by interference between the object light and the reference light is captured by an imaging unit. In addition, by performing required operation based on the interference intensity image, a complex amplitude image can be generated, and further, a three-dimensional refractive index distribution image of the observation object can be generated.

In the conventional two beam interference method, the reference light having a known wavefront (a plane wave) without passing through the observation object is used, and the object light and the reference light are made to interfere with each other by using an interferometer to acquire the interference intensity image, and thus, it is possible to accurately obtain a complex amplitude (an amplitude and a phase) of the object light.

However, in the conventional two beam interference method, it is necessary to use a laser light source for outputting light of a single frequency having a long coherence length in order to cause the object light and the reference light, which reach an imaging unit through paths which are significantly different from each other, to efficiently interfere with each other. In order to cause the object light and the reference light to efficiently interfere with each other, it is necessary to make an optical path difference between the two light beams as short as possible before reaching the imaging unit, and in addition, adjustment of the optical system of the observation apparatus is not easy, and when the optical path difference changes due to factors such as environmental variation and the like, an interference signal also changes, and thus, there is a lack of stability.

An object of an embodiment is to provide an observation apparatus and an observation method capable of easily observing an observation object while reducing influence of multiple scattered light even in the case in which the observation object is a multiple scattering object.

**Solution to Problem**

An embodiment is an observation apparatus. The observation apparatus includes (1) a light source for outputting spatially coherent light; (2) an irradiation unit for generating first light and second light from the light, and irradiating an observation object with both the first light and the second light; (3) an imaging unit for receiving both the first light and the second light which irradiate the observation object and pass through the observation object, and capturing an interference intensity image generated by interference between the first light and the second light; and (4) a processing unit for performing processing based on the interference intensity image, and (5) the irradiation unit irradiates the observation object with the first light along a fixed light irradiation direction, and irradiates the observation object with the second light along each of a plurality of light irradiation directions, (6) the imaging unit captures, for each of the plurality of light irradiation directions of the second light, the interference intensity image in a case in which a phase difference between the first light and the second light is set to each of a plurality of phase differences, and (7) the processing unit includes an interference term calculation unit for obtaining, for each of the plurality of light irradiation directions of the second light, an interference term by using a phase shift method based on the interference intensity image captured by the imaging unit in the case in which the phase difference is set to each of the plurality of phase differences; a first complex amplitude image generation unit for generating a complex amplitude image of the first light based on the interference term obtained for each of the plurality of light irradiation directions of the second light; and a second complex amplitude image generation unit for generating a complex amplitude image of the second light of each of the plurality of light irradiation directions based on the complex amplitude image of the first light.

An embodiment is an observation method. The observation method includes (1) an irradiation step of generating first light and second light from spatially coherent light output from a light source, and irradiating an observation object with both the first light and the second light; (2) an imaging step of receiving both the first light and the second light which irradiate the observation object and pass through the observation object, and capturing an interference intensity image generated by interference between the first light and the second light; and (3) a processing step of performing processing based on the interference intensity image, and (4) in the irradiation step, the observation object is irradiated with the first light along a fixed light irradiation direction, and the observation object is irradiated with the second light along each of a plurality of light irradiation directions, (5) in the imaging step, for each of the plurality of light irradiation directions of the second light, the interference intensity image is captured in a case in which a phase difference between the first light and the second light is set to each of a plurality of phase differences, and (6) in the processing step, for each of the plurality of light irradiation directions of the second light, an interference term is obtained by using a phase shift method based on the interference intensity image captured in the imaging step in the case in which the phase difference is set to each of the plurality of phase differences, a complex amplitude image of the first light is generated based on the interference term obtained for each of the plurality of light irradiation directions of the second light, and a complex amplitude image of the second light of each of the plurality of light irradiation directions is generated based on the complex amplitude image of the first light.

**Advantageous Effects of Invention**

According to the observation apparatus and the observation method of the embodiments, it is possible to reduce influence of multiple scattered light and easily observe an observation object even in the case in which the observation object is a multiple scattering object.

**Brief Description of Drawings**

[FIG. 1] FIG. 1 is a diagram illustrating a configuration of an observation apparatus 1A.
[FIG. 2] FIG. 2 is a diagram illustrating a configuration of an observation apparatus 1B.
[FIG. 3] FIG. 3 is a diagram illustrating a configuration of an observation apparatus 1C.
[FIG. 4] FIG. 4 is a diagram illustrating a configuration of an observation apparatus 1D.
[FIG. 5] FIG. 5 is a diagram illustrating a configuration of an observation apparatus 1E.
[FIG. 6] FIG. 6 is a diagram illustrating a configuration of an observation apparatus 1F.
[FIG. 7] FIG. 7 includes (a) - (e) diagrams illustrating examples of scanning of a light irradiation direction on an observation object S from each of irradiation units 31 to 35.
[FIG. 8] FIG. 8 is a diagram schematically illustrating incidence of first light and second light on the observation object S and incidence of the first light and the second light on an imaging unit 50 after passing through the observation object S.
[FIG. 9] FIG. 9 is a diagram illustrating a configuration of a processing unit 60 of the observation apparatus.
[FIG. 10] FIG. 10 is a flowchart illustrating an observation method.
[FIG. 11] FIG. 11 is a diagram schematically illustrating an arrangement at the time of a simulation A.
[FIG. 12] FIG. 12 includes (a) - (c) diagrams showing the result of the simulation A.
[FIG. 13] FIG. 13 includes (a) - (c) diagrams showing the result of the simulation A.
[FIG. 14] FIG. 14 is a diagram showing the result of the simulation A.
[FIG. 15] FIG. 15 is a diagram schematically illustrating an arrangement at the time of a simulation B.
[FIG. 16] FIG. 16 includes (a) - (c) diagrams showing the result of the simulation B.
[FIG. 17] FIG. 17 includes (a) - (c) diagrams showing the result of the simulation B.
[FIG. 18] FIG. 18 is a diagram showing the result of the simulation B.
[FIG. 19] FIG. 19 is a diagram schematically illustrating an arrangement at the time of a simulation C.
[FIG. 20] FIG. 20 is a diagram showing the result of the simulation C.
[FIG. 21] FIG. 21 is a diagram showing the result of the simulation C.

**Description of Embodiments**

Hereinafter, embodiments of an observation apparatus and an observation method will be described in detail with reference to the accompanying drawings. In the description of the drawings, the same elements will be denoted by the same reference signs, and redundant description will be omitted. The present invention is not limited to these examples, and the Claims, their equivalents, and all the changes within the scope are intended as would fall within the scope of the present invention.

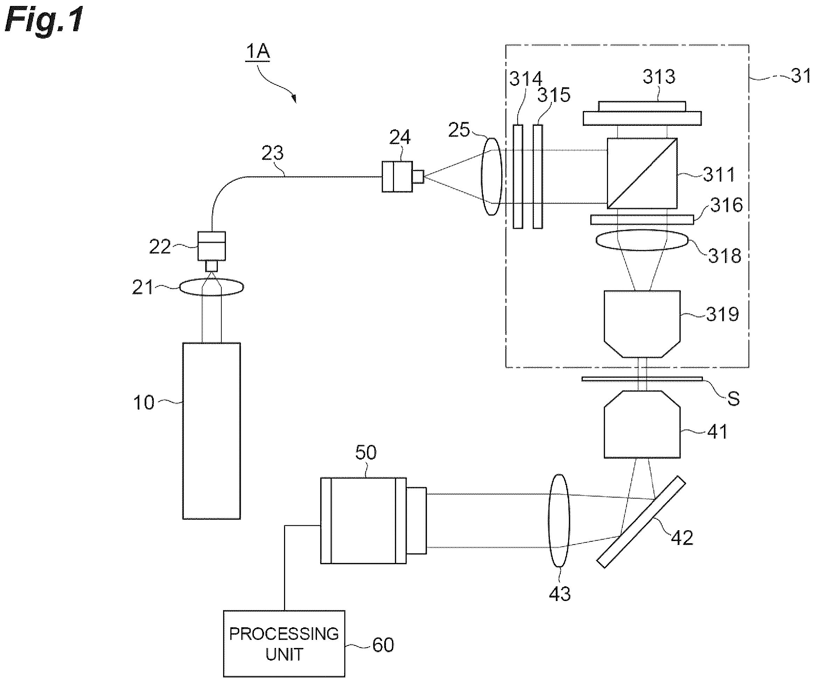

First, a configuration of an optical system of an observation apparatus will be described with reference to FIG. 1 to FIG. 6, and then the details of contents of processing in an observation apparatus and an observation method will be described.

FIG. 1 is a diagram illustrating a configuration of an observation apparatus 1A. The observation apparatus 1A includes a light source 10, an irradiation unit 31, an imaging unit 50, and a processing unit 60, and the like. The light source 10 outputs spatially coherent light. The light output from the light source 10 may be temporally coherent light, or may not be temporally coherent light.

The light source 10 may be a laser light source, or may be a light source such as, for example, a super luminescent diode (SLD), a super continuum (SC) light source, or an optical frequency comb light source. Further, spatially incoherent light output from a light emitting diode (LED), a mercury lamp, or the like may pass through a pinhole or the like to increase spatial coherence.

A lens 21 is optically coupled to the light source 10, focuses the light output from the light source 10 on a light input end 22 of an optical fiber 23, and inputs the light to the light input end 22. The optical fiber 23 guides the light input to the light input end 22 to a light output end 24. The light guided by the optical fiber 23 is output as diverging light from the light output end 24. A lens 25 is optically coupled to the light output end 24, inputs and collimates the light output as the diverging light from the light output end 24, and outputs the collimated light to the irradiation unit 31.

The irradiation unit 31 inputs the light output from the light source 10 and passed through the lens 21, the optical fiber 23, and the lens 25, and generates first light and second light from the input light. Further, the irradiation unit 31 irradiates an observation object S by combining the first light and the second light with each other. The irradiation unit 31 irradiates the observation object S with the first light along a fixed light irradiation direction, and irradiates the observation object S with the second light along each of a plurality of light irradiation directions.

The irradiation unit 31 includes a beam splitter 311, a spatial light modulator 313 of a phase modulation type, a polarizer 314, a half wave plate 315, a polarizer 316, a lens 318, and an objective lens 319.

The beam splitter 311 reflects the light arriving through the polarizer 314 and the half wave plate 315 provided between the beam splitter 311 and the lens 25 to the spatial light modulator 313. Further, the beam splitter 311 inputs the light arriving from the spatial light modulator 313, and outputs the light to the polarizer 316.

The spatial light modulator 313, out of linearly polarized light of a first orientation and linearly polarized light of a second orientation which are incident on a modulation plane and are orthogonal to each other, selectively performs phase modulation on the linearly polarized light of the second orientation, without performing phase modulation on the linearly polarized light of the first orientation. The polarizer 314 and the half wave plate 315 set the polarization state of the light such that the light incident on the modulation plane of the spatial light modulator 313 from the beam splitter 311 includes the linearly polarized light components of the first orientation and the second orientation with amounts similar to each other.

The polarizer 316 inputs the light arriving from the spatial light modulator 313 through the beam splitter 311, and enables the linearly polarized light of the first orientation and the linearly polarized light of the second orientation respectively included in the light to interfere with each other. The polarizer 316 has an optic axis of an orientation different by 45 degrees from a polarization orientation of the light (the linearly polarized light of the first orientation and the linearly polarized light of the second orientation) arriving from the spatial light modulator 313 through the beam splitter 311, and selectively transmits the polarized light component of the orientation of the optic axis out of the input light. The lens 318 and the objective lens 319 irradiate the observation object S with each of the first light and the second light output from the polarizer 316 as a plane wave.

The irradiation unit 31 having the configuration described above can set the linearly polarized light of the first orientation, which is not phase modulated by the spatial light modulator 313, as the first light, and irradiate the observation object S with the first light along the fixed light irradiation direction. The irradiation unit 31 can set the linearly polarized light of the second orientation, which is phase modulated by the spatial light modulator 313, as the second light, and irradiate the observation object S with the second light along each of the plurality of light irradiation directions.

The light irradiation direction of the second light on the observation object S can be set by a direction and an interval of a phase modulation pattern on the modulation plane of the spatial light modulator 313. Further, a phase difference between the first light and the second light can be set by a shift of the phase modulation pattern on the modulation plane of the spatial light modulator 313.

An objective lens 41 inputs the light (the first light, the second light) which irradiates the observation object S by the irradiation unit 31 and passes through the observation object S, and outputs the light to a mirror 42. A lens 43 inputs the light output from the objective lens 41 and reflected by the mirror 42, and inputs the light to an imaging plane of the imaging unit 50.

The imaging unit 50 receives both the first light and the second light arriving at the imaging plane from the lens 43, and captures an interference intensity image generated by interference between the first light and the second light. The imaging unit 50 captures the interference intensity image in the case in which the phase difference between the first light and the second light is set to each of a plurality of phase differences, for each of the plurality of light irradiation directions of the second light.

The processing unit 60 is electrically connected to the imaging unit 50, and generates a complex amplitude image and the like by performing required processing based on the interference intensity image captured by the imaging unit 50. The processing contents performed by the processing unit 60 will be described later.

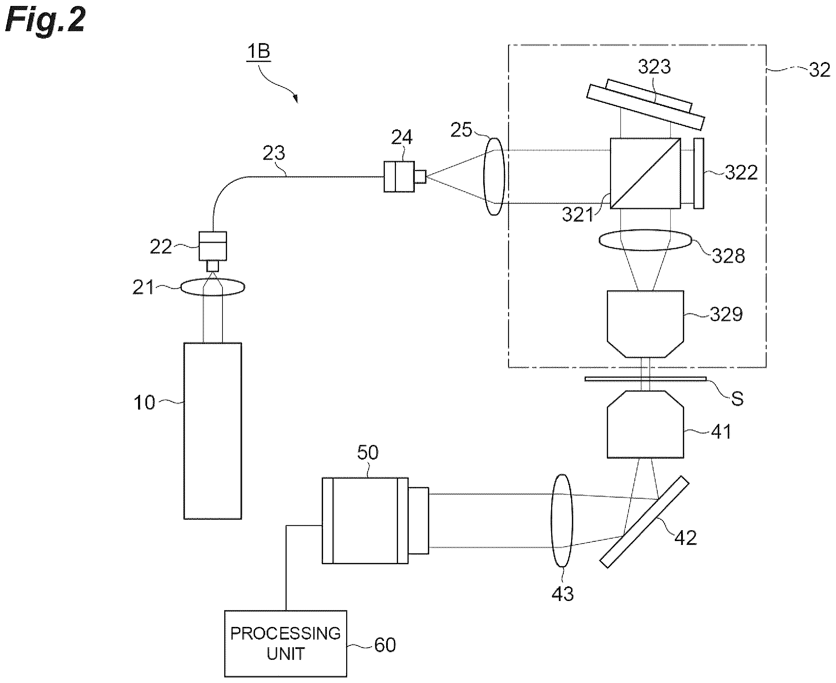

FIG. 2 is a diagram illustrating a configuration of an observation apparatus 1B. The observation apparatus 1B includes the light source 10, an irradiation unit 32, the imaging unit 50, and the processing unit 60, and the like. As compared with the observation apparatus 1A (FIG. 1), the observation apparatus 1B (FIG. 2) is different in that the irradiation unit 32 is provided instead of the irradiation unit 31.

The irradiation unit 32 includes a beam splitter 321, a mirror 322, a spatial light modulator 323 of an intensity modulation type, a lens 328, and an objective lens 329. The spatial light modulator 323 may be a digital micromirror device (DMD).

The beam splitter 321 splits the light arriving from the lens 25 into first split light (the first light) and second split light (the second light), outputs the first split light to the mirror 322, and outputs the second split light to the spatial light modulator 323. Further, the beam splitter 321 inputs the first split light which is reflected by the mirror 322, inputs the second split light which is intensity modulated by the spatial light modulator 323, combines the first split light and the second split light, and outputs the combined light to the lens 328. The lens 328 and the objective lens 329 irradiate the observation object S with each of the first split light and the second split light output from the beam splitter 321 as a plane wave.

The irradiation unit 32 having the configuration described above can irradiate the observation object S with the first split light reflected by the mirror 322 along the fixed light irradiation direction. The irradiation unit 32 can irradiate the observation object S with the second split light intensity modulated by the spatial light modulator 323 along each of the plurality of light irradiation directions.

The light irradiation direction of the second split light on the observation object S can be set by a direction and an interval of an intensity modulation pattern on a modulation plane of the spatial light modulator 323. Further, the phase difference between the first split light and the second split light can be set by a shift of the intensity modulation pattern on the modulation plane of the spatial light modulator 323.

In addition, the phase difference can also be adjusted by a position of the mirror 322 or the spatial light modulator 323. However, the case in which the phase difference is set by the shift of the intensity modulation pattern on the modulation plane of the spatial light modulator 323 is preferable in that there is no mechanical movement of the component.

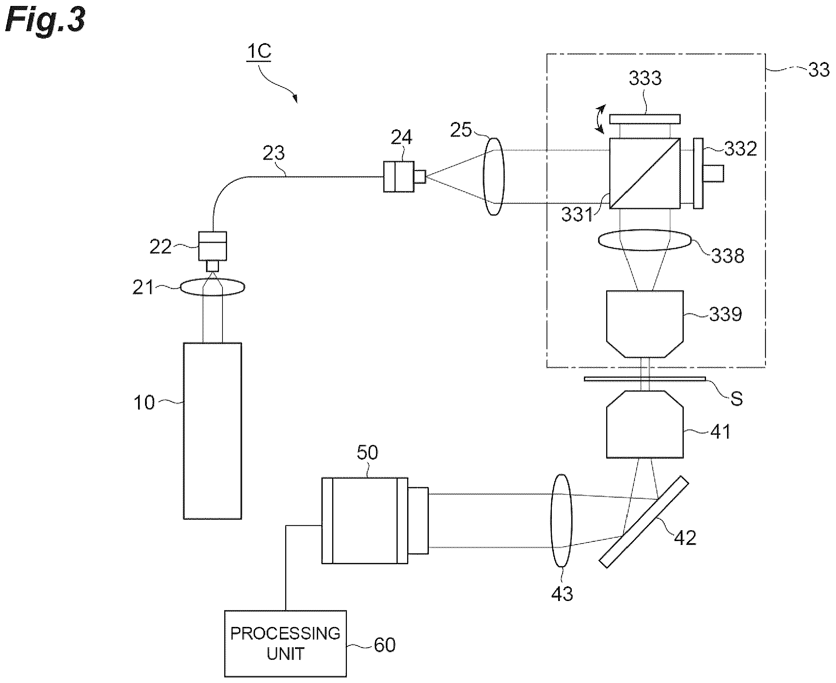

FIG. 3 is a diagram illustrating a configuration of an observation apparatus 1C. The observation apparatus 1C includes the light source 10, an irradiation unit 33, the imaging unit 50, and the processing unit 60, and the like. As compared with the observation apparatus 1A (FIG. 1), the observation apparatus 1C (FIG. 3) is different in that the irradiation unit 33 is provided instead of the irradiation unit 31.

The irradiation unit 33 includes a beam splitter 331, a mirror 332, a mirror 333, a lens 338, and an objective lens 339. For the mirror 332, a position of a reflection surface is set to be changeable along a direction perpendicular to the reflection surface by driving by using, for example, a piezo actuator. For the mirror 333, an orientation of a reflection surface is set to be changeable by using, for example, a galvano mirror, a voice coil mirror, a piezo tilt mirror, or the like.

The beam splitter 331 splits the light arriving from the lens 25 into the first split light (the first light) and the second split light (the second light), outputs the first split light to the mirror 332, and outputs the second split light to the mirror 333. Further, the beam splitter 331 inputs the first split light which is reflected by the mirror 332, inputs the second split light which is reflected by the mirror 333, combines the first split light and the second split light, and outputs the combined light to the lens 338. The lens 338 and the objective lens 339 irradiate the observation object S with each of the first split light and the second split light output from the beam splitter 331 as a plane wave.

The irradiation unit 33 having the configuration described above can irradiate the observation object S with the first split light reflected by the mirror 332 along the fixed light irradiation direction. The irradiation unit 33 can irradiate the observation object S with the second split light reflected by the mirror 333 along each of the plurality of light irradiation directions.

The light irradiation direction of the second split light on the observation object S can be set by the orientation of the reflection surface of the mirror 333. Further, the phase difference between the first split light and the second split light can be set by the position of the reflection surface of the mirror 332. The phase difference may be set by a position of the reflection surface of the mirror 333.

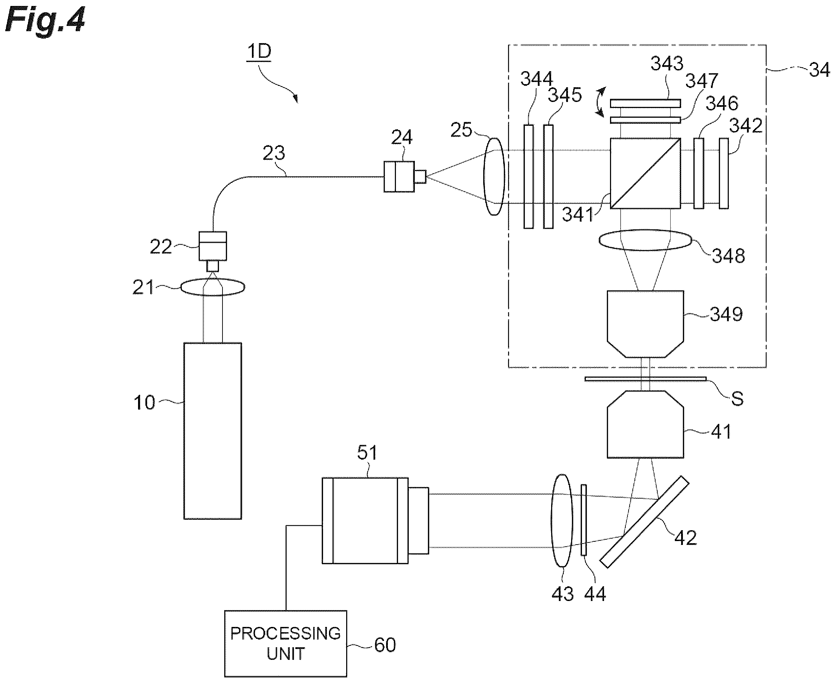

FIG. 4 is a diagram illustrating a configuration of an observation apparatus 1D. The observation apparatus 1D includes the light source 10, an irradiation unit 34, an imaging unit 51, and the processing unit 60, and the like. As compared to the observation apparatus 1A (FIG. 1), the observation apparatus 1D (FIG. 4) is different in that the irradiation unit 34 is provided instead of the irradiation unit 31, different in that the imaging unit 51 is provided instead of the imaging unit 50, and different in that a quarter wave plate 44 disposed on an optical path between the objective lens 41 and the imaging unit 51 is further provided.

The irradiation unit 34 includes a polarization beam splitter 341, a mirror 342, a mirror 343, a polarizer 344, a half wave plate 345, a quarter wave plate 346, a quarter wave plate 347, a lens 348, and an objective lens 349. For the mirror 343, an orientation of a reflection surface is set to be changeable by using, for example, a galvano mirror, a voice coil mirror, a piezo tilt mirror, or the like.

The polarization beam splitter 341 splits by polarization the light arriving through the polarizer 344 and the half wave plate 345 provided between the polarization beam splitter 341 and the lens 25 into the first split light (the first light) and the second split light (the second light), outputs the first split light to the mirror 342, and outputs the second split light to the mirror 343.

The quarter wave plate 346 is provided between the mirror 342 for reflecting the first split light and the polarization beam splitter 341, and rotates an orientation of the linear polarization of the first split light by 90 degrees by passing the first split light twice. The quarter wave plate 347 is provided between the mirror 343 for reflecting the second split light and the polarization beam splitter 341, and rotates an orientation of the linear polarization of the second split light by 90 degrees by passing the second split light twice.

The polarization beam splitter 341 inputs the first split light which is reflected by the mirror 342 and passed through the quarter wave plate 346, inputs the second split light which is reflected by the mirror 343 and passed through the quarter wave plate 347, combines by polarization the first split light and the second split light input as described above, and outputs the combined light to the lens 348. The lens 348 and the objective lens 349 irradiate the observation object S with each of the first split light and the second split light output from the polarization beam splitter 341 as a plane wave.

The irradiation unit 34 having the configuration described above can irradiate the observation object S with the first split light reflected by the mirror 342 along the fixed light irradiation direction. The irradiation unit 34 can irradiate the observation object S with the second split light reflected by the mirror 343 along each of the plurality of light irradiation directions. The light irradiation direction of the second split light on the observation object S can be set by the orientation of the reflection surface of the mirror 343.

The quarter wave plate 44 is provided on an optical path between the objective lens 41 and the imaging unit 51. The quarter wave plate 44 inputs the first split light and the second split light which are linearly polarized light beams orthogonal to each other, and outputs the first split light and the second split light as circularly polarized light beams having rotation directions different from each other.

The imaging unit 51 includes a polarization camera capable of individually and simultaneously performing imaging respectively for a plurality of polarized light components. The imaging unit 51 receives the first split light and the second split light passing through the quarter wave plate 44, and thus, the interference intensity image in the case in which the phase difference between the light beams is set to each of the plurality of phase differences can be captured.

As the polarization camera, an image sensor (Polarsens (registered trademark)) commercialized by Sony Corporation, or an image sensor (Area Scan Polarization Sensor) commercialized by Teledyne DALSA may be used. Each of the above sensors can simultaneously capture two-dimensional images of linearly polarized light beams of four orientations, and can simultaneously acquire four interference intensity images having phase differences different by $\pi/2$. Further, as the polarization camera, an image sensor (Line Scan Polarization Sensor) commercialized by Teledyne DALSA may also be used, and the above sensor can simultaneously capture two-dimensional images of linearly polarized light beams of three orientations.

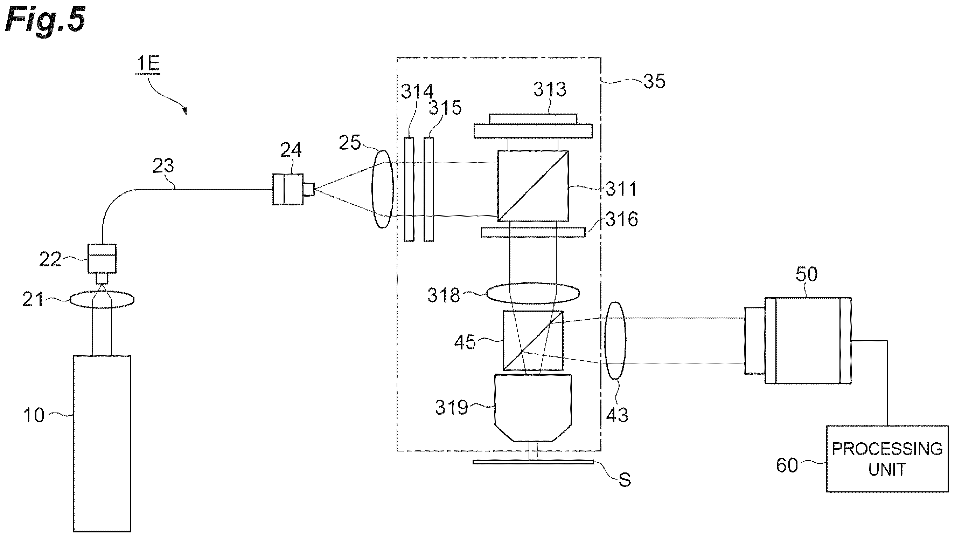

FIG. 5 is a diagram illustrating a configuration of an observation apparatus 1E. The observation apparatus 1A (FIG. 1) captures the interference intensity image generated by the interference between the first light and the second light transmitted through the observation object S. On the other hand, the observation apparatus 1E (FIG. 5) captures the interference intensity image generated by the interference between the first light and the second light reflected by the observation object S.

The observation apparatus 1E (FIG. 5) includes the light source 10, an irradiation unit 35, the imaging unit 50, and the processing unit 60, and the like. As compared with the observation apparatus 1A (FIG. 1), the observation apparatus 1E (FIG. 5) is different in that the irradiation unit 35 is provided instead of the irradiation unit 31. In the irradiation unit 35, in the configuration of the irradiation unit 31, a beam splitter 45 is disposed on an optical path between the lens 318 and the objective lens 319.

At the time of the light irradiation on the observation object S, the observation object S is irradiated with the first light and the second light output from the beam splitter 311 sequentially through the polarizer 316, the lens 318, the beam splitter 45, and the objective lens 319. At the time of the imaging by the imaging unit 50, the first light and the second light reflected by the observation object S reach the imaging unit 50 sequentially through the objective lens 319, the beam splitter 45, and the lens 43. The objective lens 319 provided in the observation apparatus 1E (FIG. 5) also serves as the objective lens 41 provided in the observation apparatus 1A (FIG. 1).

The configuration of the reflection type of the observation apparatus 1E (FIG. 5) corresponds to the configuration of the transmission type of the observation apparatus 1A (FIG. 1). In a similar way, the configuration of the reflection type can also be used corresponding to the configuration of the transmission type of each of the observation apparatus 1B (FIG. 2), the observation apparatus 1C (FIG. 3), and the observation apparatus 1D (FIG. 4). In the case of the configuration of the reflection type corresponding to the observation apparatus 1D (FIG. 4), the quarter wave plate 44 and the imaging unit 51 are used.

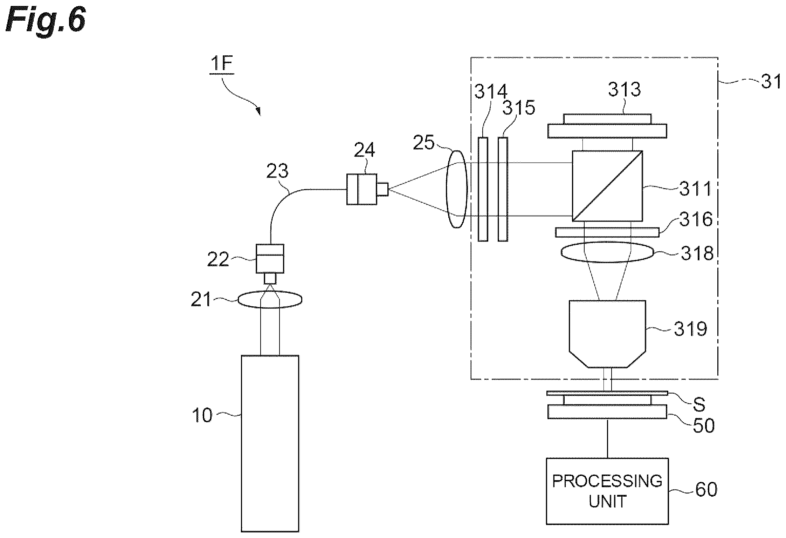

FIG. 6 is a diagram illustrating a configuration of an observation apparatus 1F. The observation apparatus 1A (FIG. 1) is provided with the imaging optical system between the imaging unit 50 and the observation object S, and captures the interference intensity image on the plane optically conjugate to the imaging plane of the imaging unit 50. On the other hand, the observation apparatus 1F (FIG. 6) is not provided with the imaging optical system, and the imaging plane of the imaging unit 50 is disposed immediately below and close to the observation object S.

As compared with the observation apparatus 1A (FIG. 1), the observation apparatus 1F (FIG. 6) is different in that the imaging optical system (the objective lens 41, the mirror 42, and the lens 43) is not provided. The imaging unit 50 receives the first light and the second light immediately after passing through the observation object S on the imaging plane, and captures the interference intensity image generated by the interference between the first light and the second light.

The configuration of the observation apparatus 1F (FIG. 6) corresponds to the configuration of the observation apparatus 1A (FIG. 1). In a similar way, the configuration in which the imaging optical system is not provided can also be used corresponding to the configuration of each of the observation apparatus 1B (FIG. 2), the observation apparatus 1C (FIG. 3), and the observation apparatus 1D (FIG. 4). In the case of the configuration in which the imaging optical system is not provided corresponding to the observation apparatus 1D (FIG. 4), the quarter wave plate 44 and the imaging unit 51 are used.

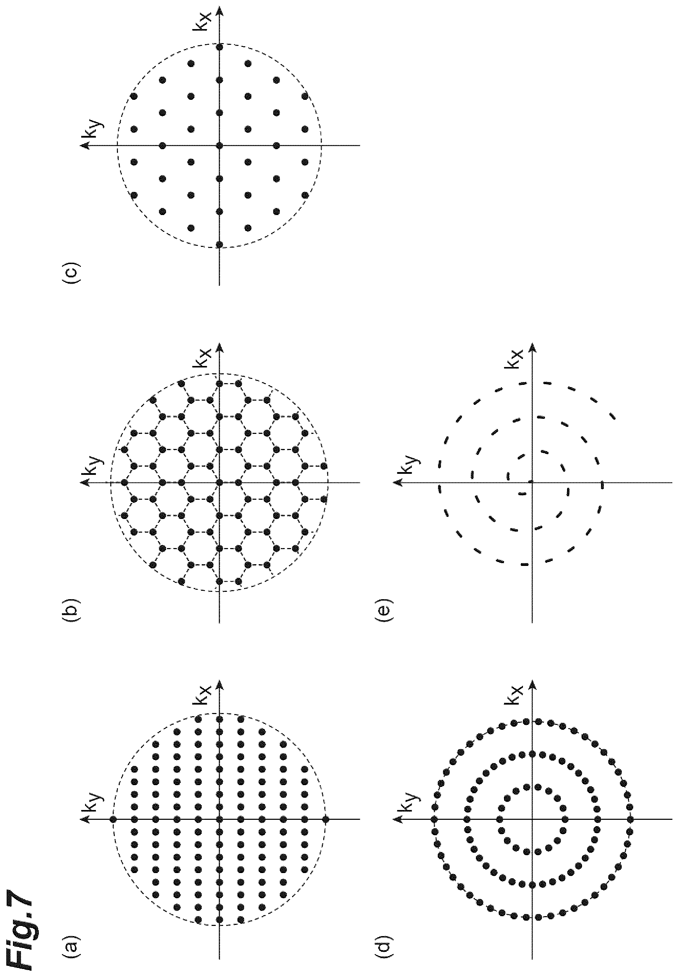

FIG. 7 includes diagrams illustrating examples of scanning of the light irradiation direction on the observation object S from each of the irradiation units 31 to 35. In this case, an xyz orthogonal coordinate system having a z axis in a direction parallel to the optical axis of the objective lens used for irradiating the observation object S with the light is set, and further, each of the light irradiation directions is represented by a position in the $k_x k_y k_z$ wavenumber space. In the diagrams, a position of each circular point represents the light irradiation direction in the $k_x k_y$ plane in which the horizontal axis is set to $k_x$ and the vertical axis is set to $k_y$.

The scanning of the light irradiation direction, in the $k_x k_y$ plane, (a) may be discretely and periodically arranged in a rectangular lattice shape, (b) may be discretely and periodically arranged in a honeycomb shape, (c) may be discretely and periodically arranged in a hexagonal lattice shape, (d) may be discretely arranged on a circumference of each of a plurality of concentric circles, or (e) may be discretely arranged in a spiral shape.

In any of the above cases, the light irradiation direction can be scanned as far as it is allowed by the objective lens used for irradiating the observation object S with the light. Raster scan or random scan may be used. In the case of the raster scan, return scan may be performed or may not be performed.

Next, an observation method performed by using the observation apparatus 1A (FIG. 1) will be described. The same applies to the case in which the observation apparatus of each of the other configurations is used.

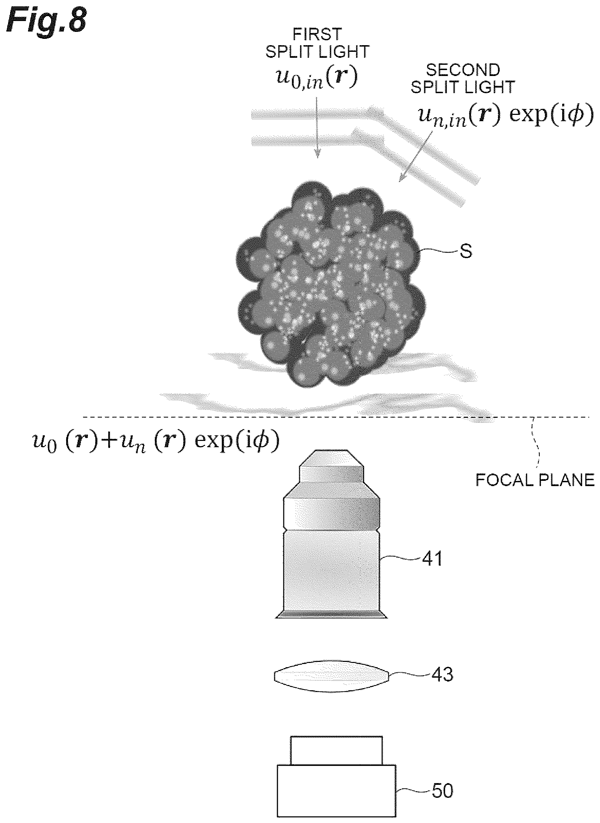

FIG. 8 is a diagram schematically illustrating the incidence of the first light and the second light on the observation object S and the incidence of the first light and the second light on the imaging unit 50 after passing through the observation object S. A wavefront of the first light which is incident on the observation object S is represented as $u_{0,in}(r)$. A wavefront of the second light which is incident on the observation object S along the n-th light irradiation direction (n = 1 to N) out of the plurality of (N) light irradiation directions of the second light is represented as $u_{n,in}(r)\exp(i\phi)$.

r is a variable representing the position. $\phi$ is the phase difference between the first light and the second light. i is an imaginary unit. A wavefront of the first light on the imaging plane of the imaging unit 50 or a focal plane (a plane optically conjugate to the imaging plane) is represented as $u_0(r)$, and a wavefront of the second light is represented as $u_n(r)\exp(i\phi)$.

The interference intensity image $I_n(r, \phi)$ acquired by the imaging by using the imaging unit 50 is represented by the following Formula (1). The interference intensity image $I_n(r, \phi)$ is an interference intensity image acquired by the imaging by using the imaging unit 50 when the phase difference between the first light and the second light is set to $\phi$, and in the case in which, for the observation object S, the first light is incident on the observation object along the fixed light irradiation direction, and the second light is incident on the observation object along the n-th light irradiation direction. The focal plane (the plane optically conjugate to the imaging plane) may be a plane set in the observation object S, may be a plane set in the imaging unit 50 side with respect to the observation object S, or may be a plane set in the irradiation unit 31 side with respect to the observation object S.

[Formula 1]

$$I_n(\mathbf{r}, \phi) = \left| u_0(\mathbf{r}) + u_n(\mathbf{r}) \exp\left(i\phi\right) \right|^2 \tag{1}$$

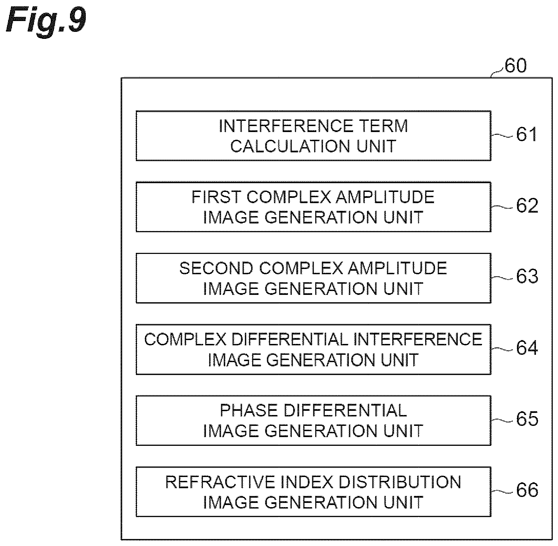

FIG. 9 is a diagram illustrating a configuration of the processing unit 60 provided in the observation apparatus. The processing unit 60 includes an interference term calculation unit 61, a first complex amplitude image generation unit 62, a second complex amplitude image generation unit 63, a complex differential interference image generation unit 64, a phase differential image generation unit 65, and a refractive index distribution image generation unit 66. The processing unit 60 may be configured, for example, by using a computer.

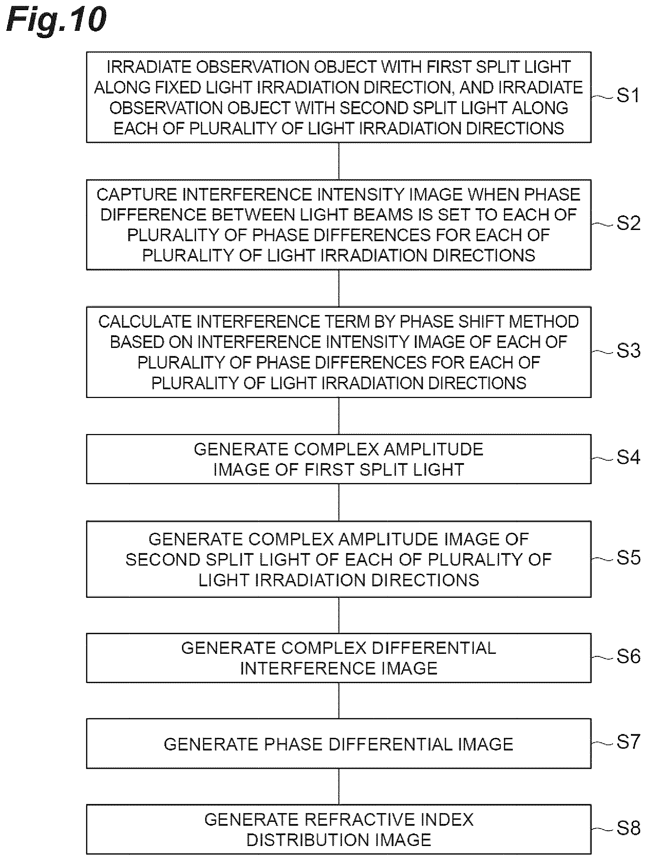

FIG. 10 is a flowchart illustrating the observation method. In an irradiation step S1, the irradiation unit 31 irradiates the observation object S with the first light and the second light in an overlapping manner. In this case, the light irradiation direction of the first light on the observation object S is set to be fixed, the light irradiation direction of the second light on the observation object S is set to be each of the plurality of light irradiation directions, and the phase difference $\phi$ between the first light and the second light is set to each value.

In an imaging step S2, the imaging unit 50 captures the interference intensity image (Formula (1)) in the case in which the phase difference $\phi$ between the first light and the second light is set to each of the plurality of phase differences, for each of the plurality of light irradiation directions of the second light.

A processing step performed by the processing unit 60 includes steps S3 to S8. In an interference term calculation step S3, the interference term calculation unit 61 of the processing unit 60 obtains, for each of the plurality of light irradiation directions of the second light, an interference term by using a phase shift method based on the interference intensity image (Formula (1)) acquired by the imaging unit 50 in the case in which the phase difference $\phi$ is set to each of the plurality of phase differences.

For example, in the case in which the phase shift method of three points is used, the interference term calculation unit 61 obtains the interference term $C_n(r) = u_0{}^*(r) \cdot u_n(r)$ by the following Formula (2). The interference term may be obtained by $u_0(r) \cdot u_n{}^*(r)$. The phase shift method of four or more points may be used. The interference term $C_n(r)$ is obtained for each of the plurality of light irradiation directions of the second light (that is, for each n (= 1 to N)).

[Formula 2]

$$C_n(\mathbf{r}) = u_0^*(\mathbf{r}) \cdot u_n(\mathbf{r})$$

$$= \frac{1}{3}\left[ I_n(\mathbf{r},0) + I_n\left(\mathbf{r},\frac{\pi}{3}\right)\exp\left(-i\frac{\pi}{3}\right) + I_n\left(\mathbf{r},\frac{2\pi}{3}\right)\exp\left(-i\frac{2\pi}{3}\right) \right] \quad (2)$$

In a first complex amplitude image generation step S4, the first complex amplitude image generation unit 62 of the processing unit 60 generates the complex amplitude image of the first light based on the interference term $C_n(\mathbf{r})$ obtained for each of the plurality of light irradiation directions of the second light. A phase of the complex amplitude $u_0(\mathbf{r})$ of the first light can be estimated as follows.

After a phase slope (a difference of the light incident directions) between the first light and the second light is corrected, a coherent sum $C_{sum}(\mathbf{r})$ of the interference terms after the correction is obtained by the following Formula (3). In this case, the light incident direction of the first light is set to be parallel to the z axis, and further, the wavenumber vector representing the n-th light incident direction of the second light is set to $k_n$.

[Formula 3]

$$C_{sum}(\mathbf{r}) = \sum_{n=1}^{N} C_n(\mathbf{r})\exp(i\mathbf{k}_n \cdot \mathbf{r})$$

$$= \sum_{n=1}^{N} u_0^*(\mathbf{r}) \cdot u_n(\mathbf{r})\exp(i\mathbf{k}_n \cdot \mathbf{r}) = u_0^*(\mathbf{r})\sum_{n=1}^{N} u_n(\mathbf{r})\exp(i\mathbf{k}_n \cdot \mathbf{r}) \quad (3)$$

The phase of the first factor $(u_0^*(\mathbf{r}))$ of the rightmost side of the above Formula (3) is a component of the first light which is incident on the observation object S along the fixed light irradiation direction, and is greatly affected by the scattering because there is no optical sectioning effect. On the other hand, the phase of the second factor (sum of $u_n(\mathbf{r})$ $\exp(i\mathbf{k}_n\mathbf{r})$) of the rightmost side of the above Formula (3) is a sum for the plurality of light incident directions, and has a relatively flat distribution because information near the focal plane is selectively extracted by the optical sectioning effect by the coherent sum.

From the above fact, the phase $\phi_0(\mathbf{r})$ of the complex amplitude $u_0(\mathbf{r})$ of the first light can be approximately represented by the phase of the coherent sum $C_{sum}(\mathbf{r})$ of the interference terms after the correction of the phase slope, as represented by the following Formula (4).

[Formula 4]

$$\phi_0(\mathbf{r}) = \angle u_0(\mathbf{r}) \cong -\angle \sum_{n=1}^{N} C_{sum}(\mathbf{r}) \quad (4)$$

An amplitude of the complex amplitude $u_0(\mathbf{r})$ of the first light can be obtained from an intensity image $|u_0(\mathbf{r})|^2$ which is captured by the imaging unit 50 in the case in which the observation object S is not irradiated with the second light and the observation object S is irradiated only with the first light.

For example, the observation object S can be irradiated only with the first light, by adjusting the orientation of the optic axis of each of the polarizer 314 and the half wave plate 315 in the irradiation unit 31 in the case of the observation apparatus 1A (FIG. 1), by the setting of the modulation pattern of the spatial light modulator 323 in the irradiation unit 32 in the case of the observation apparatus 1B (FIG. 2), by removing the mirror 333 in the irradiation unit 33 in the case of the observation apparatus 1C (FIG. 3), and by removing the mirror 343 in the irradiation unit 34 in the case of the observation apparatus 1D (FIG. 4).

Further, the amplitude of the complex amplitude $u_0(\mathbf{r})$ of the first light can also be estimated based on the interference term $C_n(\mathbf{r})$ as follows. An intensity sum $I_{sum}(\mathbf{r})$ of the interference terms $C_n(\mathbf{r})$ is obtained by the following Formula (5).

[Formula 5]

$$I_{sum}(\mathbf{r}) = \frac{1}{N}\sum_{n=1}^{N}\left|C_n(\mathbf{r})\right|^2$$

$$= \frac{1}{N}\sum_{n=1}^{N}\left|u_0^*(\mathbf{r})\cdot u_n(\mathbf{r})\right|^2 = \left|u_0(\mathbf{r})\right|^2 \frac{1}{N}\sum_{n=1}^{N}\left|u_n(\mathbf{r})\right|^2 \qquad (5)$$

The first factor ($|u_0(r)|^2$) of the rightmost side of the above Formula (5) is a component of the first light which is incident on the observation object S along the fixed light irradiation direction, and is greatly affected by the scattering because there is no optical sectioning effect. On the other hand, the second factor (sum of $|u_n(r)|^2$) of the rightmost side of the above Formula (5) is a sum for the plurality of light incident directions, and has a relatively uniform distribution because of the averaging of the scattered light by the optical sectioning effect by the coherent sum.

From the above fact, the amplitude $A_0(r)$ of the complex amplitude $u_0(r)$ of the first light can be approximately represented by a square root of the intensity sum $I_{sum}(r)$ of the interference terms $C_n(r)$, as represented by the following Formula (6).

[Formula 6]

$$A_0(\mathbf{r}) = \left|u_0(\mathbf{r})\right| \cong \sqrt{I_{sum}(\mathbf{r})} \qquad (6)$$

In the first complex amplitude image generation step S4, the first complex amplitude image generation unit 62 can generate the complex amplitude image $u_0(r)$ of the first light by the following Formula (7) based on the phase $\phi_0(r)$ and the amplitude $A_0(r)$ of the complex amplitude $u_0(r)$ of the first light obtained as described above.

[Formula 7]

$$u_0(\mathbf{r}) = A_0(\mathbf{r})\exp\big(\phi_0(\mathbf{r})\big) \qquad (7)$$

The optical sectioning effect is an effect capable of selectively acquiring an image on the focal plane of the objective lens in, for example, a confocal microscope or a differential interference contrast microscope. In these microscopes, selective irradiation and selective detection is realized by increasing the numerical apertures of both the incident side and the detection side, and thus, the optical sectioning effect can be realized.

In a second complex amplitude image generation step S5, the second complex amplitude image generation unit 63 of the processing unit 60 can generate the complex amplitude image $u_n(r)$ of the second light of each of the plurality of light irradiation directions by the following Formula (8), based on the complex amplitude image $u_0(r)$ of the first light and the interference term $C_n(r)$. In addition, in the following Formula (8), when a denominator of the right side is 0, $u_n(r)$ becomes indeterminate, and thus, it is preferable to generate the complex amplitude image $u_n(r)$ of the second light of each of the plurality of light irradiation directions by the following Formula (9) instead of Formula (8). $\varepsilon$ is a positive small value. In the case in which it is set to $\varepsilon = 0$, Formula (9) coincides with Formula (8).

[Formula 8]

$$u_n(\mathbf{r}) = \frac{C_n(\mathbf{r})}{u_0^*(\mathbf{r})} \qquad (8)$$

[Formula 9]

$$u_n(\mathbf{r}) = \frac{C_n(\mathbf{r})\cdot u_0(\mathbf{r})}{\left|u_0(\mathbf{r})\right|^2 + \varepsilon} \qquad (9)$$

In a complex differential interference image generation step S6, the complex differential interference image generation unit 64 of the processing unit 60 can generate a complex differential interference image W(r) by the following Formula (10), based on the complex amplitude image $u_n(r)$ of the second light of each of the plurality of light irradiation directions. $\delta r$ represents shear. At least one of the x component $\delta x$ and the y component $\delta y$ of $\delta r$ is non-zero. In the case in which $\delta x \neq 0$ and $\delta y = 0$, the complex differential interference image in which the x direction is the shear direction is obtained.

In the case in which $\delta x = 0$ and $\delta y \neq 0$, the complex differential interference image in which the y direction is the shear direction is obtained. In the case in which $\delta x \neq 0$ and $\delta y \neq 0$, the complex differential interference image in which a direction according to a ratio of $\delta x$ and $\delta y$ is the shear direction is obtained.

[Formula 10]

$$W(\mathbf{r}) = \sum_{n=1}^{N} \bar{u}_n(\mathbf{r}) \cdot \bar{u}_n^{\,*}(\mathbf{r} - \delta\mathbf{r})$$

$$\bar{u}_n(\mathbf{r}) = u_n(\mathbf{r}) \exp(i\mathbf{k}_n \cdot \mathbf{r}) \tag{10}$$

In a phase differential image generation step S7, the phase differential image generation unit 65 of the processing unit 60 can generate a phase differential image represented by the phase of the complex differential interference image $W(r)$. In addition, in a refractive index distribution image generation step S8, the refractive index distribution image generation unit 66 of the processing unit 60 can obtain a phase differential image at each position in the z axis direction (that is, a three-dimensional phase differential image) by using the Formula of free propagation of the wavefront, and further, generate a refractive index distribution image of the observation object S by performing deconvolution based on the phase differential image.

Next, simulation results will be described. In simulations A and B described below, the phase differential image is obtained, and in a simulation C, the refractive index distribution image is also obtained.

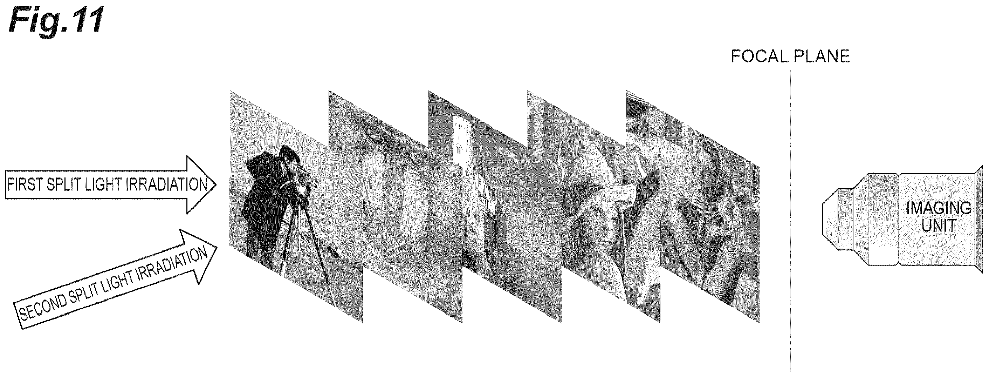

In the simulation A, as illustrated in FIG. 11, five types of phase images arranged in parallel at intervals from each other are set as the observation object, and the focal plane is set on a plane on the imaging unit side separated by $5\lambda$ from the phase image which is closest to the imaging unit out of the five types of phase images. $\lambda$ is a wavelength of the light. FIG. 11 is a diagram schematically illustrating the arrangement at the time of performing the simulation A.

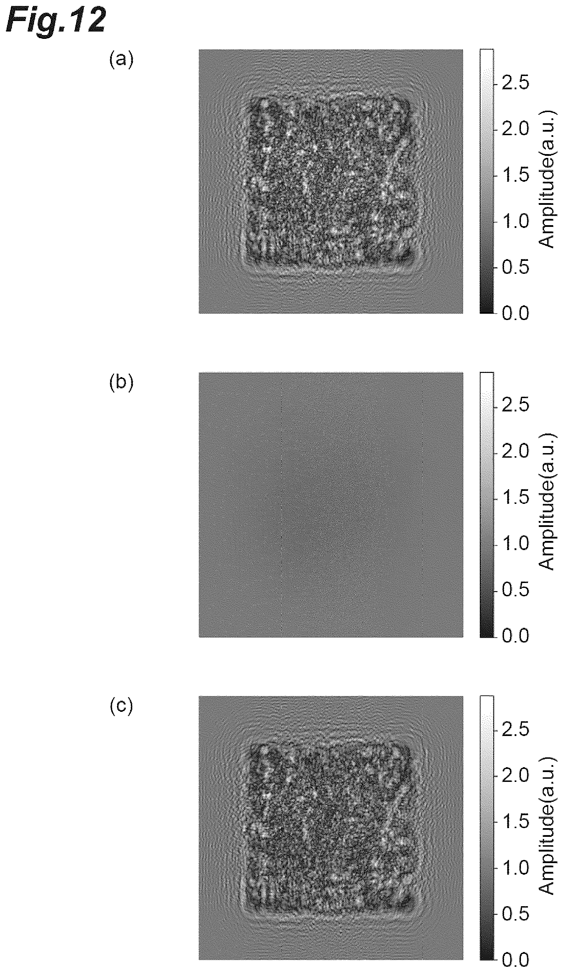

FIG. 12 includes diagrams respectively showing images of (a) $|u_0(r)|$, (b) the square root of the intensity sum of $|u_n(r)|^2$, and (c) the amplitude $A_0(r)$ of the estimated complex amplitude $u_0(r)$ of the first light, which are obtained based on the interference term at the time of the simulation A. As shown in the diagrams, $|u_0(r)|$ is greatly affected by the scattering, and on the other hand, the sum of $|u_n(r)|^2$ has a relatively uniform distribution, and the amplitude $A_0(r)$ of the complex amplitude $u_0(r)$ of the first light can be approximately represented by the square root of the intensity sum $I_{sum}(r)$ of the interference terms.

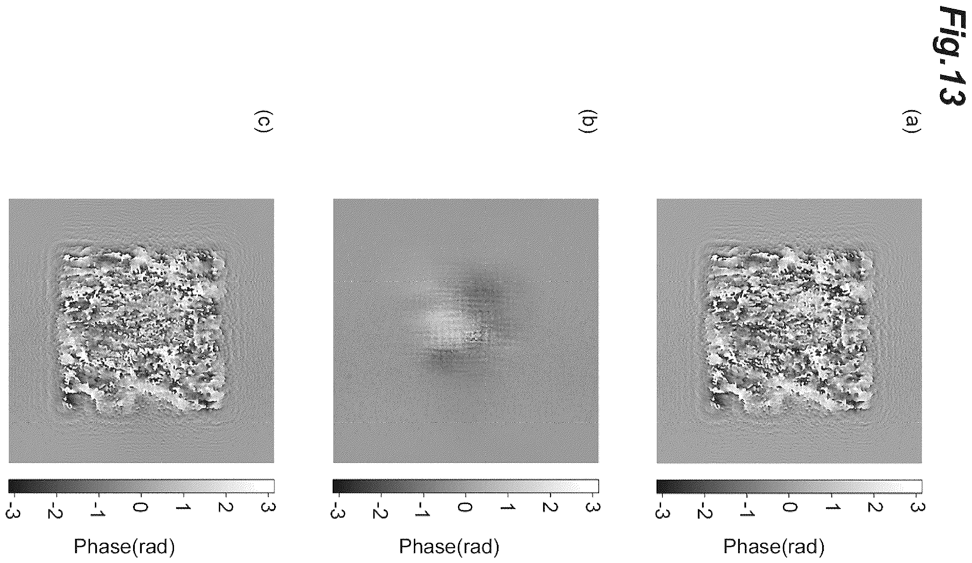

FIG. 13 includes diagrams respectively showing images of (a) the phase of $u_0^{\,*}(r)$, (b) the phase of the coherent sum of $u_n(r)$, and (c) the phase $\phi_0(r)$ of the estimated complex amplitude $u_0(r)$ of the first light, which are obtained based on the interference term at the time of the simulation A. As shown in the diagrams, the phase of $u_0^{\,*}(r)$ is greatly affected by the scattering, and on the other hand, the phase of the coherent sum of $u_n(r)$ has a relatively flat distribution, and the phase $\phi_0(r)$ of the complex amplitude $u_0(r)$ of the first light can be approximately represented by the phase of the coherent sum $C_{sum}(r)$ of the interference terms.

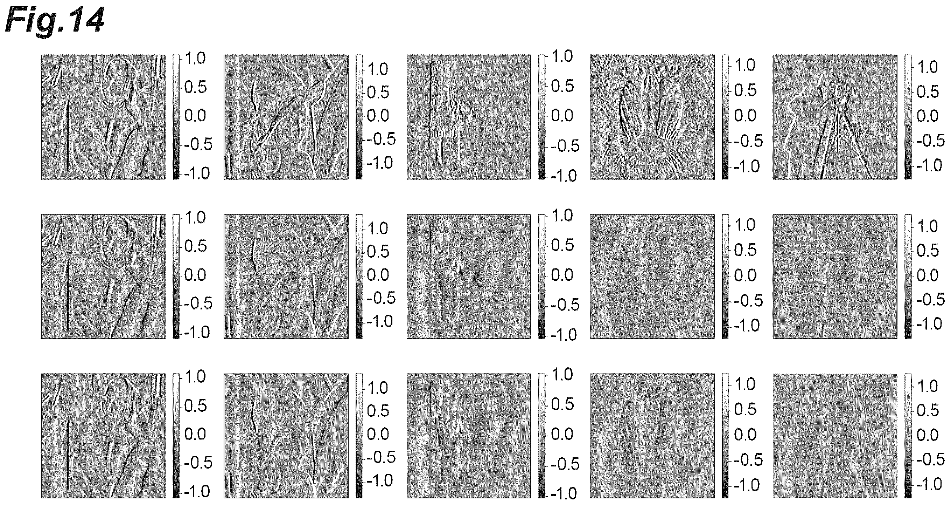

FIG. 14 is a diagram showing the result of the simulation A. In the diagram, an upper row shows the phase differential images of the exact solution, a middle row shows the phase differential images generated by using the conventional two beam interference method, and a lower row shows the phase differential images generated by using the present embodiment. As shown in the diagram, the phase differential image generated by the simulation A has a similar level of clarity as compared with the phase differential image generated by using the conventional two beam interference method.

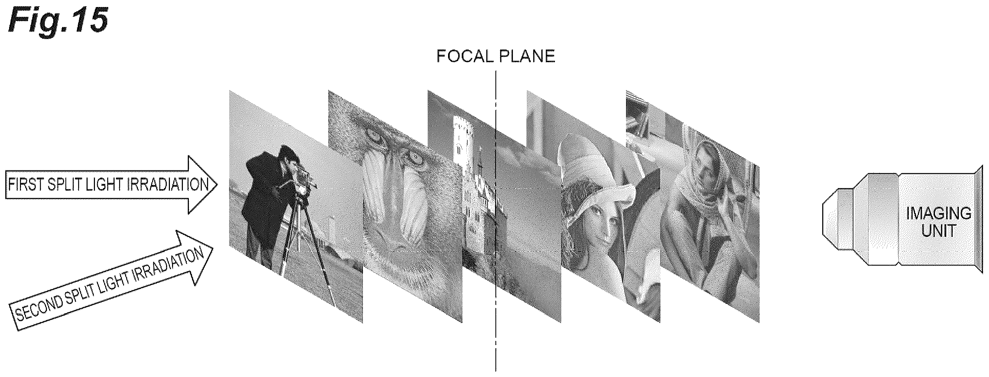

In the simulation B, as illustrated in FIG. 15, the five types of phase images arranged in parallel at intervals from each other are set as the observation object, and the focal plane is set on a plane of the phase image at the center position out of the five types of phase images. $\lambda$ is the wavelength of the light. FIG. 15 is a diagram schematically illustrating the arrangement at the time of performing the simulation B.

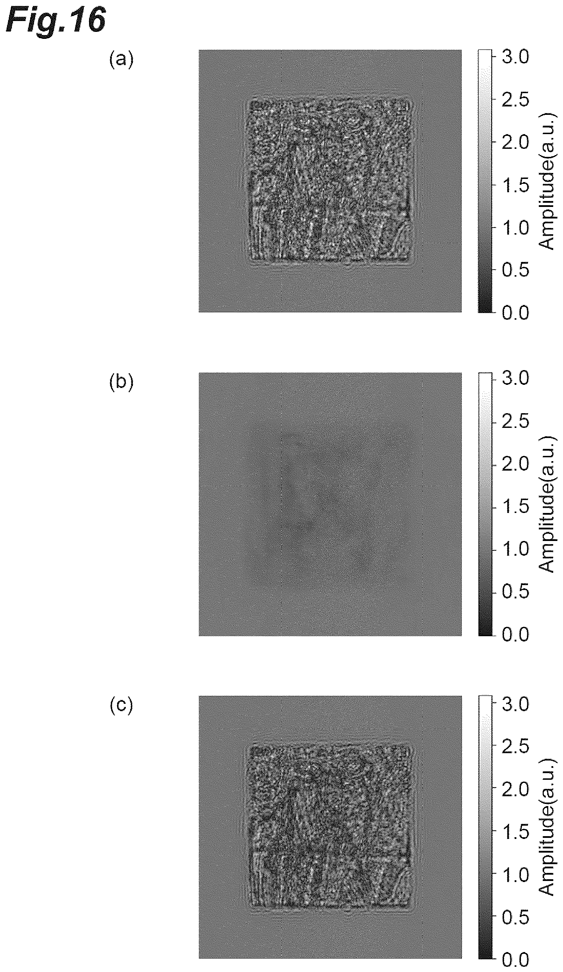

FIG. 16 includes diagrams respectively showing images of (a) $|u_0(r)|$, (b) the square root of the intensity sum of $|u_n(r)|^2$, and (c) the amplitude $A_0(r)$ of the estimated complex amplitude $u_0(r)$ of the first light, which are obtained based on the interference term at the time of the simulation B. As shown in the diagrams, $|u_0(r)|$ is greatly affected by the scattering, and on the other hand, the sum of $|u_n(r)|^2$ has a relatively uniform distribution, and the amplitude $A_0(r)$ of the complex amplitude $u_0(r)$ of the first light can be approximately represented by the square root of the intensity sum $I_{sum}(r)$ of the interference terms.

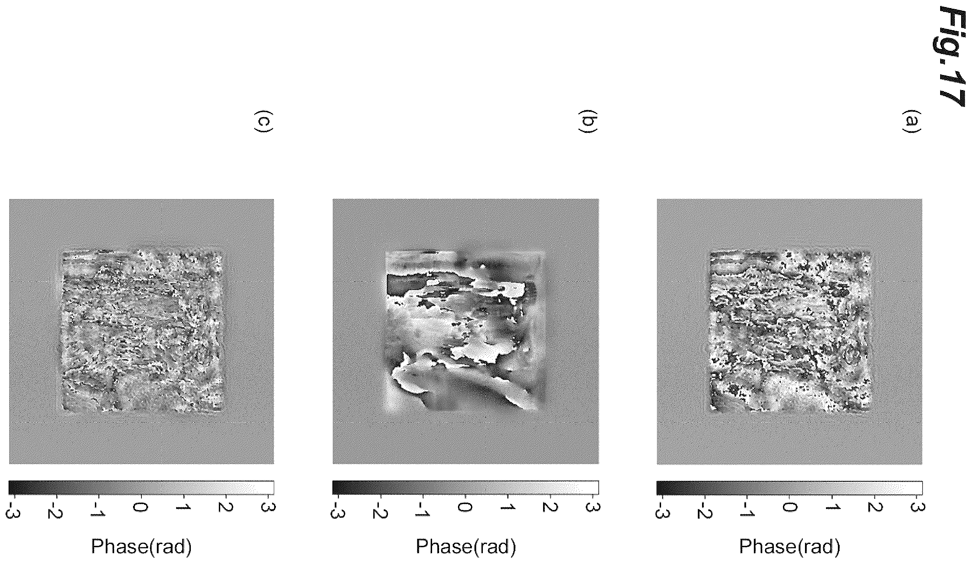

FIG. 17 includes diagrams respectively showing images of (a) the phase of $u_0^{\,*}(r)$, (b) the phase of the coherent sum of $u_n(r)$, and (c) the phase $\phi_0(r)$ of the estimated complex amplitude $u_0(r)$ of the first light, which are obtained based on the interference term at the time of the simulation B. As shown in the diagrams, under the condition with respect to the position of the focal plane in the simulation B, the phase of $u_0{}^*(r)$ is greatly affected by the scattering, and further, the phase of the coherent sum of $u_n(r)$ is also affected by the scattering to no small degree.

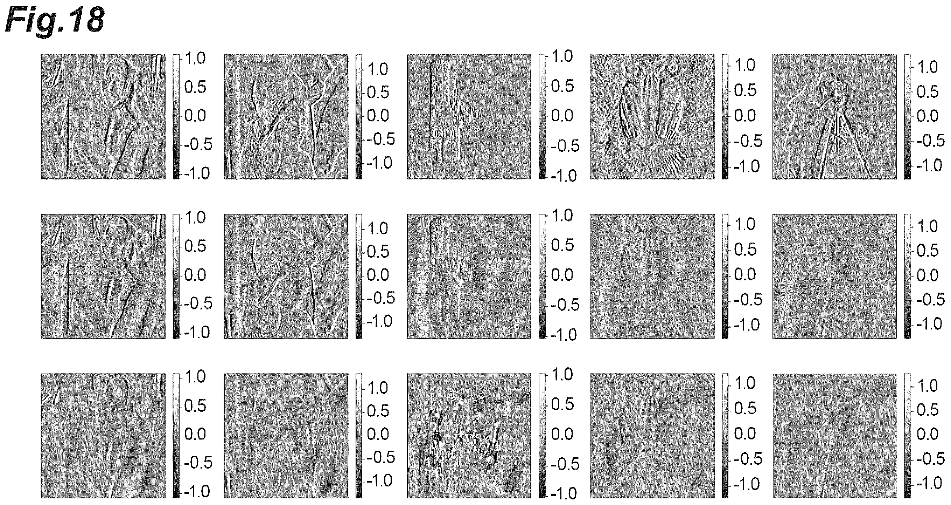

FIG. 18 is a diagram showing the result of the simulation B. In the diagram, an upper row shows the phase differential images of the exact solution, a middle row shows the phase differential images generated by using the conventional two beam interference method, and a lower row shows the phase differential images generated by using the present embodiment. As shown in the diagram, the phase differential image generated by the simulation B is distorted as compared with the phase differential image generated by using the conventional two beam interference method. The phase image at the center position on the focal plane is particularly distorted. In addition, it is confirmed that the phase differential image can be generated even in the case in which the focal plane is positioned at the observation object.

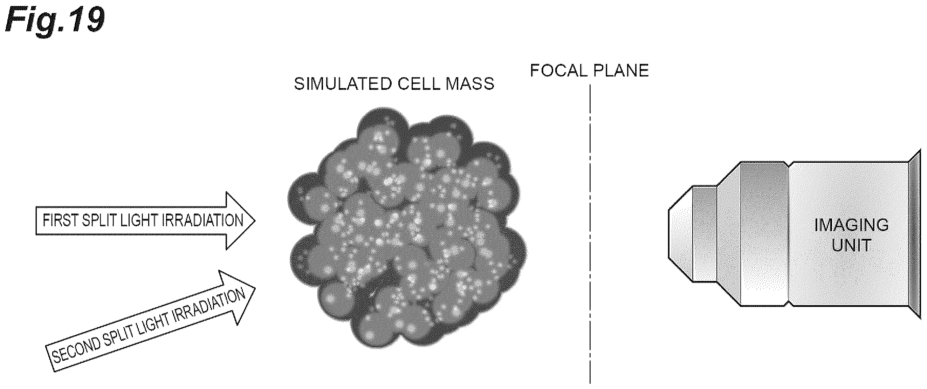

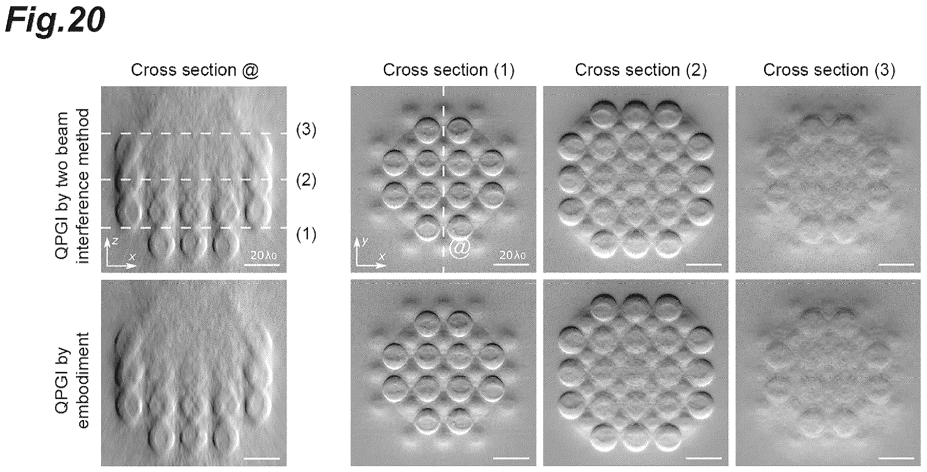

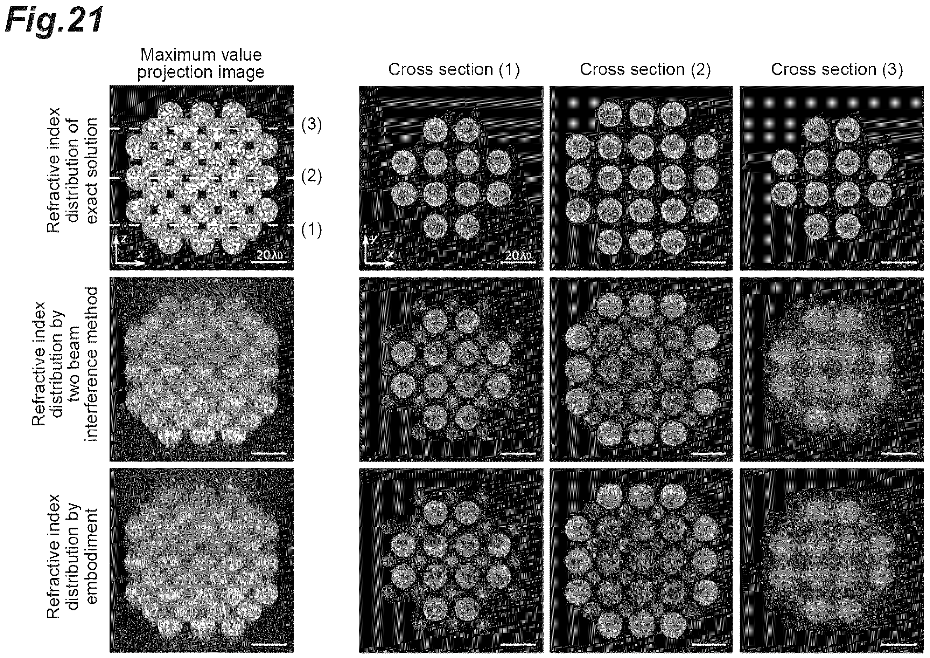

In the simulation C, as illustrated in FIG. 19, a simulated cell mass is used as the observation object, and the focal plane is set at a position between the observation object and the imaging unit. FIG. 19 is a diagram schematically illustrating the arrangement at the time of performing the simulation C. Each of FIG. 20 and FIG. 21 is a diagram showing the result of the simulation C.

In FIG. 20, an upper row shows the phase differential images generated by using the conventional two beam interference method, and a lower row shows the phase differential images generated by using the present embodiment. Further, in FIG. 20, a left side column shows the phase differential images in a cross section parallel to the z axis, and the other columns show the phase differential images in xy cross sections respectively at three positions in the z direction.

In FIG. 21, an upper row shows the refractive index distribution images of the exact solution, a middle row shows the refractive index distribution images generated by using the conventional two beam interference method, and a lower row shows the refractive index distribution images generated by using the present embodiment. Further, in FIG. 21, a left side column shows maximum value projection images in the y direction, and the other columns show the refractive index distribution images in xy cross sections respectively at three positions in the z direction.

The phase differential image and the refractive index distribution image generated by the simulation C have a similar level of clarity as compared with the phase differential image and the refractive index distribution image generated by using the conventional two beam interference method.

From the results of the simulations A to C, it can be seen that, in the case in which the imaging optical system is provided between the imaging unit and the observation object, it is preferable that the focal plane of the imaging unit (the plane optically conjugate to the imaging plane) is set as a plane outside the observation object.

In the present embodiment, the first light with which the observation object is irradiated along the fixed light irradiation direction corresponds to the reference light used in the conventional two beam interference method. In the conventional two beam interference method, the reference light does not pass through the observation object, and the object light after passing through the observation object and the reference light are combined and received by the imaging unit. On the other hand, in the present embodiment, both the first light and the second light generated in the irradiation unit are output from the irradiation unit and received by the imaging unit through the observation object.

In the present embodiment, even in the case in which the irradiation unit includes the configuration of the interference optical system, the observation object is not disposed on the optical path of the interference optical system. In the present embodiment, the optical path of the interference optical system included in the irradiation unit can be made shorter than the optical path in the case of the conventional two beam interference method in which the observation object is disposed on the optical path. Therefore, in the present embodiment, the irradiation unit can be made small, and the observation apparatus including the above irradiation unit can also be made small. In addition, in the case in which the irradiation unit includes the configuration of the interference optical system, the interference optical system is set to a Michelson interferometer in the above embodiment, and further, the interference optical system may be set to a Mach-Zehnder interferometer.

Further, in the present embodiment, the irradiation unit can be made small, and thus, adjustment of the optical system can be easily performed, and it is also easy to shorten the optical path difference between the first light and the second light. By using the above configuration, the light source does not need to output the light of a single frequency having a long coherence length, and the degree of freedom of selection of the light source increases.

Further, in the present embodiment, the irradiation unit may have an integrated configuration. In particular, in the case in which the irradiation unit is configured to include the spatial light modulator, the relative positional relationship of the respective components (the spatial light modulator, the beam splitter, the mirror, the lens, and the like) constituting the irradiation unit can be fixed and integrated. Further, even in the configuration in which the position or the orientation of the mirror is adjusted by using the piezo actuator in the irradiation unit, the relative positional relationship of the respective components (the beam splitter, the piezo actuator, the lens, and the like) constituting the irradiation unit can be fixed and integrated. By using the integrated configuration of the irradiation unit as described above, the observation apparatus including the irradiation unit can be more easily assembled, and it is possible to more easily observe the observation object.

According to the present embodiment, it is possible to easily observe the observation object while reducing the influence of the multiple scattered light, even in the case in which the observation object is the multiple scattering object.

The observation apparatus and the observation method are not limited to the embodiments and configuration examples described above, and various modifications are possible.

The observation apparatus of a first aspect according to the above embodiment includes (1) a light source for outputting spatially coherent light; (2) an irradiation unit for generating first light and second light from the light, and irradiating an observation object with both the first light and the second light; (3) an imaging unit for receiving both the first light and the second light which irradiate the observation object and pass through the observation object, and capturing an interference intensity image generated by interference between the first light and the second light; and (4) a processing unit for performing processing based on the interference intensity image, and (5) the irradiation unit irradiates the observation object with the first light along a fixed light irradiation direction, and irradiates the observation object with the second light along each of a plurality of light irradiation directions, (6) the imaging unit captures, for each of the plurality of light irradiation directions of the second light, the interference intensity image in a case in which a phase difference between the first light and the second light is set to each of a plurality of phase differences, and (7) the processing unit includes an interference term calculation unit for obtaining, for each of the plurality of light irradiation directions of the second light, an interference term by using a phase shift method based on the interference intensity image captured by the imaging unit in the case in which the phase difference is set to each of the plurality of phase differences; a first complex amplitude image generation unit for generating a complex amplitude image of the first light based on the interference term obtained for each of the plurality of light irradiation directions of the second light; and a second complex amplitude image generation unit for generating a complex amplitude image of the second light of each of the plurality of light irradiation directions based on the complex amplitude image of the first light.

In the observation apparatus of a second aspect, in the configuration of the first aspect, the imaging unit may capture the interference intensity image on a plane set outside the observation object.

In the observation apparatus of a third aspect, in the configuration of the first or second aspect, the irradiation unit may include a spatial light modulator for selectively performing phase modulation on, out of linearly polarized light of a first orientation and linearly polarized light of a second orientation which are orthogonal to each other, the linearly polarized light of the second orientation, and the light output from the light source may be incident on the spatial light modulator, the linearly polarized light of the first orientation out of the incident light may be set as the first light, and the linearly polarized light of the second orientation may be phase modulated by the spatial light modulator for setting the light irradiation direction and the phase difference and may be set as the second light.

In the observation apparatus of a fourth aspect, in the configuration of the first or second aspect, the irradiation unit may include a mirror and a spatial light modulator of an intensity modulation type, and the light output from the light source may be split into the first light and the second light, the first light may be reflected by the mirror, the second light may be intensity modulated by the spatial light modulator for setting the light irradiation direction and the phase difference, and the first light and the second light may be combined and output.

In the observation apparatus of a fifth aspect, in the configuration of the first or second aspect, the irradiation unit may include a first mirror and a second mirror, the light output from the light source may be split into the first light and the second light, the first light may be reflected by the first mirror, the second light may be reflected by the second mirror, and the first light and the second light may be combined and output, the light irradiation direction may be set by an orientation of a reflection surface of the second mirror, and the phase difference may be set by a position of a reflection surface of the first mirror or the second mirror.

In the observation apparatus of a sixth aspect, in the configuration of the first or second aspect, the irradiation unit may include a first mirror and a second mirror, the light output from the light source may be split by polarization into the first light and the second light, the first light may be reflected by the first mirror, the second light may be reflected by the second mirror, and the first light and the second light may be combined by polarization and output, the light irradiation direction may be set by an orientation of a reflection surface of the second mirror, and the imaging unit may include a polarization camera capable of simultaneously performing imaging respectively for a plurality of polarized light components, and may capture a plurality of interference intensity images with phase differences different from each other by performing imaging respectively for the plurality of polarized light components.

In the observation apparatus of a seventh aspect, in the configuration of any one of the first to sixth aspects, the first complex amplitude image generation unit may obtain a phase of the complex amplitude image of the first light based on a coherent sum of the interference terms obtained respectively for the plurality of light irradiation directions of the second light.

In the observation apparatus of an eighth aspect, in the configuration of any one of the first to seventh aspects, the first complex amplitude image generation unit may obtain an amplitude of the complex amplitude image of the first light based on an intensity image captured by the imaging unit in a case in which the observation object is irradiated only with the first light out of the first light and the second light.

In the observation apparatus of a ninth aspect, in the configuration of any one of the first to seventh aspects, the first complex amplitude image generation unit may obtain an amplitude of the complex amplitude image of the first light based on an intensity sum of the interference terms obtained respectively for the plurality of light irradiation directions of the second light.

In the observation apparatus of a tenth aspect, in the configuration of any one of the first to ninth aspects, the processing unit may further include a complex differential interference image generation unit for generating a complex differential interference image based on the complex amplitude image of the second light of each of the plurality of light irradiation directions.

In the observation apparatus of an eleventh aspect, in the configuration of the tenth aspect, the processing unit may further include a phase differential image generation unit for generating a phase differential image based on the complex differential interference image.

In the observation apparatus of a twelfth aspect, in the configuration of the eleventh aspect, the processing unit may further include a refractive index distribution image generation unit for generating a refractive index distribution image of the observation object based on the phase differential image.

The observation method of a first aspect according to the above embodiment includes (1) an irradiation step of generating first light and second light from spatially coherent light output from a light source, and irradiating an observation object with both the first light and the second light; (2) an imaging step of receiving both the first light and the second light which irradiate the observation object and pass through the observation object, and capturing an interference intensity image generated by interference between the first light and the second light; and (3) a processing step of performing processing based on the interference intensity image, and (4) in the irradiation step, the observation object is irradiated with the first light along a fixed light irradiation direction, and the observation object is irradiated with the second light along each of a plurality of light irradiation directions, (5) in the imaging step, for each of the plurality of light irradiation directions of the second light, the interference intensity image is captured in a case in which a phase difference between the first light and the second light is set to each of a plurality of phase differences, and (6) in the processing step, for each of the plurality of light irradiation directions of the second light, an interference term is obtained by using a phase shift method based on the interference intensity image captured in the imaging step in the case in which the phase difference is set to each of the plurality of phase differences, a complex amplitude image of the first light is generated based on the interference term obtained for each of the plurality of light irradiation directions of the second light, and a complex amplitude image of the second light of each of the plurality of light irradiation directions is generated based on the complex amplitude image of the first light.

In the observation method according to the above embodiment, as second to twelfth aspects of the observation method, in the configuration of the first aspect, the same configuration as any one of the second to twelfth aspects of the observation apparatus described above may be used.

**Industrial** Applicability

The embodiments can be used as an observation apparatus and an observation method capable of reducing influence of multiple scattered light and easily observing an observation object even in the case in which the observation object is a multiple scattering object.

**Reference Signs List**

1A - 1F - observation apparatus, 10 - light source, 21 - lens, 22 - light input end, 23 - optical fiber, 24 - light output end, 25 - lens, 31 - 35 - irradiation unit, 41 - objective lens, 42 - mirror, 43 - lens, 44 - quarter wave plate, 45 - beam splitter, 50, 51 - imaging unit, 60 - processing unit, 61 - interference term calculation unit, 62 - first complex amplitude image generation unit, 63 - second complex amplitude image generation unit, 64 - complex differential interference image generation unit, 65 - phase differential image generation unit, 66 - refractive index distribution image generation unit, 311 - beam splitter, 313 - spatial light modulator, 314 - polarizer, 315 - half wave plate, 316 - polarizer, 318 - lens, 319 - objective lens, 321 - beam splitter, 322 - mirror, 323 - spatial light modulator, 328 - lens, 329 - objective lens, 331 - beam splitter, 332, 333 - mirror, 338 - lens, 339 - objective lens, 341 - polarization beam splitter, 342, 343 - mirror, 344 - polarizer, 345 - half wave plate, 346, 347 - quarter wave plate, 348 - lens, 349 - objective lens.

**Claims**

1. An observation apparatus comprising:

a light source for outputting spatially coherent light;
an irradiation unit for generating first light and second light from the light, and irradiating an observation object with both the first light and the second light;

an imaging unit for receiving both the first light and the second light which irradiate the observation object and pass through the observation object, and capturing an interference intensity image generated by interference between the first light and the second light; and

a processing unit for performing processing based on the interference intensity image, wherein

the irradiation unit irradiates the observation object with the first light along a fixed light irradiation direction, and irradiates the observation object with the second light along each of a plurality of light irradiation directions,

the imaging unit captures, for each of the plurality of light irradiation directions of the second light, the interference intensity image in a case in which a phase difference between the first light and the second light is set to each of a plurality of phase differences, and

the processing unit includes:

an interference term calculation unit for obtaining, for each of the plurality of light irradiation directions of the second light, an interference term by using a phase shift method based on the interference intensity image captured by the imaging unit in the case in which the phase difference is set to each of the plurality of phase differences;

a first complex amplitude image generation unit for generating a complex amplitude image of the first light based on the interference term obtained for each of the plurality of light irradiation directions of the second light; and

a second complex amplitude image generation unit for generating a complex amplitude image of the second light of each of the plurality of light irradiation directions based on the complex amplitude image of the first light.

2. The observation apparatus according to Claim 1, wherein the imaging unit captures the interference intensity image on a plane set outside the observation object.

3. The observation apparatus according to Claim 1 or 2, wherein

the irradiation unit includes a spatial light modulator for selectively performing phase modulation on, out of linearly polarized light of a first orientation and linearly polarized light of a second orientation which are orthogonal to each other, the linearly polarized light of the second orientation, and

the light output from the light source is incident on the spatial light modulator, the linearly polarized light of the first orientation out of the incident light is set as the first light, and the linearly polarized light of the second orientation is phase modulated by the spatial light modulator for setting the light irradiation direction and the phase difference and is set as the second light.

4. The observation apparatus according to Claim 1 or 2, wherein

the irradiation unit includes a mirror and a spatial light modulator of an intensity modulation type, and

the light output from the light source is split into the first light and the second light, the first light is reflected by the mirror, the second light is intensity modulated by the spatial light modulator for setting the light irradiation direction and the phase difference, and the first light and the second light are combined and output.

5. The observation apparatus according to Claim 1 or 2, wherein

the irradiation unit includes a first mirror and a second mirror,

the light output from the light source is split into the first light and the second light, the first light is reflected by the first mirror, the second light is reflected by the second mirror, and the first light and the second light are combined and output,

the light irradiation direction is set by an orientation of a reflection surface of the second mirror, and

the phase difference is set by a position of a reflection surface of the first mirror or the second mirror.

6. The observation apparatus according to Claim 1 or 2, wherein

the irradiation unit includes a first mirror and a second mirror,

the light output from the light source is split by polarization into the first light and the second light, the first light is reflected by the first mirror, the second light is reflected by the second mirror, and the first light and the second light are combined by polarization and output,

the light irradiation direction is set by an orientation of a reflection surface of the second mirror, and

the imaging unit includes a polarization camera capable of simultaneously performing imaging respectively for a plurality of polarized light components, and captures a plurality of interference intensity images with phase differences different from each other by performing imaging respectively for the plurality of polarized light components.

7. The observation apparatus according to any one of Claims 1 to 6, wherein the first complex amplitude image generation unit obtains a phase of the complex amplitude image of the first light based on a coherent sum of the interference terms obtained respectively for the plurality of light irradiation directions of the second light.

8. The observation apparatus according to any one of Claims 1 to 7, wherein the first complex amplitude image generation unit obtains an amplitude of the complex amplitude image of the first light based on an intensity image captured by the imaging unit in a case in which the observation object is irradiated only with the first light out of the first light and the second light.

9. The observation apparatus according to any one of Claims 1 to 7, wherein the first complex amplitude image generation unit obtains an amplitude of the complex amplitude image of the first light based on an intensity sum of the interference terms obtained respectively for the plurality of light irradiation directions of the second light.

10. The observation apparatus according to any one of Claims 1 to 9, wherein the processing unit further includes a complex differential interference image generation unit for generating a complex differential interference image based on the complex amplitude image of the second light of each of the plurality of light irradiation directions.

11. The observation apparatus according to Claim 10, wherein the processing unit further includes a phase differential image generation unit for generating a phase differential image based on the complex differential interference image.

12. The observation apparatus according to Claim 11, wherein the processing unit further includes a refractive index distribution image generation unit for generating a refractive index distribution image of the observation object based on the phase differential image.

13. An observation method comprising:

an irradiation step of generating first light and second light from spatially coherent light output from a light source, and irradiating an observation object with both the first light and the second light;
an imaging step of receiving both the first light and the second light which irradiate the observation object and pass through the observation object, and capturing an interference intensity image generated by interference between the first light and the second light; and
a processing step of performing processing based on the interference intensity image, wherein
in the irradiation step, the observation object is irradiated with the first light along a fixed light irradiation direction, and the observation object is irradiated with the second light along each of a plurality of light irradiation directions,
in the imaging step, for each of the plurality of light irradiation directions of the second light, the interference intensity image is captured in a case in which a phase difference between the first light and the second light is set to each of a plurality of phase differences, and
in the processing step,
for each of the plurality of light irradiation directions of the second light, an interference term is obtained by using a phase shift method based on the interference intensity image captured in the imaging step in the case in which the phase difference is set to each of the plurality of phase differences,
a complex amplitude image of the first light is generated based on the interference term obtained for each of the plurality of light irradiation directions of the second light, and
a complex amplitude image of the second light of each of the plurality of light irradiation directions is generated based on the complex amplitude image of the first light.

Fig.1

# Fig.2

Fig.3

# Fig.4

EP 4 653 933 A1

*Fig.5*

Fig.6

# Fig.7

(a)

(b)

(c)

(d)

(e)

EP 4 653 933 A1

# Fig.8

FIRST
SPLIT LIGHT
$u_{0,in}(\boldsymbol{r})$

SECOND
SPLIT LIGHT
$u_{n,in}(\boldsymbol{r})\exp(i\phi)$

S

$u_0(\boldsymbol{r})+u_n(\boldsymbol{r})\exp(i\phi)$

FOCAL PLANE

41

43

50

# Fig.9

INTERFERENCE TERM
CALCULATION UNIT — 61

FIRST COMPLEX AMPLITUDE
IMAGE GENERATION UNIT — 62

SECOND COMPLEX AMPLITUDE
IMAGE GENERATION UNIT — 63

COMPLEX DIFFERENTIAL INTERFERENCE
IMAGE GENERATION UNIT — 64

PHASE DIFFERENTIAL
IMAGE GENERATION UNIT — 65

REFRACTIVE INDEX DISTRIBUTION
IMAGE GENERATION UNIT — 66

60

# Fig.10

IRRADIATE OBSERVATION OBJECT WITH FIRST SPLIT LIGHT ALONG FIXED LIGHT IRRADIATION DIRECTION, AND IRRADIATE OBSERVATION OBJECT WITH SECOND SPLIT LIGHT ALONG EACH OF PLURALITY OF LIGHT IRRADIATION DIRECTIONS ～S1

CAPTURE INTERFERENCE INTENSITY IMAGE WHEN PHASE DIFFERENCE BETWEEN LIGHT BEAMS IS SET TO EACH OF PLURALITY OF PHASE DIFFERENCES FOR EACH OF PLURALITY OF LIGHT IRRADIATION DIRECTIONS ～S2

CALCULATE INTERFERENCE TERM BY PHASE SHIFT METHOD BASED ON INTERFERENCE INTENSITY IMAGE OF EACH OF PLURALITY OF PHASE DIFFERENCES FOR EACH OF PLURALITY OF LIGHT IRRADIATION DIRECTIONS ～S3

GENERATE COMPLEX AMPLITUDE IMAGE OF FIRST SPLIT LIGHT ～S4

GENERATE COMPLEX AMPLITUDE IMAGE OF SECOND SPLIT LIGHT OF EACH OF PLURALITY OF LIGHT IRRADIATION DIRECTIONS ～S5

GENERATE COMPLEX DIFFERENTIAL INTERFERENCE IMAGE ～S6

GENERATE PHASE DIFFERENTIAL IMAGE ～S7

GENERATE REFRACTIVE INDEX DISTRIBUTION IMAGE ～S8

Fig.11

EP 4 653 933 A1

Fig.12

(a)

(b)

(c)

# *Fig.13*

(a)

(b)

(c)

*Fig.14*

## Fig.15

FOCAL PLANE

FIRST SPLIT LIGHT IRRADIATION

SECOND SPLIT LIGHT IRRADIATION

IMAGING UNIT

## Fig.16

(a)

(b)

(c)

## Fig.17

(a)

(b)

(c)

Fig.18

Fig.19

# Fig.20

Fig.21

## INTERNATIONAL SEARCH REPORT

| International application No. |
| --- |
| **PCT/JP2023/044309** |

**A. CLASSIFICATION OF SUBJECT MATTER**

*G02B 21/14*(2006.01)i; *G01N 21/17*(2006.01)i; *G01N 21/45*(2006.01)i; *G02B 21/00*(2006.01)i
FI: G02B21/14; G01N21/17 610; G01N21/45 A; G02B21/00

According to International Patent Classification (IPC) or to both national classification and IPC

**B. FIELDS SEARCHED**

Minimum documentation searched (classification system followed by classification symbols)

G02B21/14; G01N21/17; G01N21/45; G02B21/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2020-42165 A (HAMAMATSU PHOTONICS K.K.) 19 March 2020 (2020-03-19) entire text, all drawings | 1-13 |
| A | WO 2022/054305 A1 (HAMAMATSU PHOTONICS K.K.) 17 March 2022 (2022-03-17) entire text, all drawings | 1-13 |
| A | JP 2019-124679 A (HAMAMATSU PHOTONICS K.K.) 25 July 2019 (2019-07-25) entire text, all drawings | 1-13 |
| A | JP 2019-144121 A (THE NATIONAL INSTITUTE OF ADVANCED INDUSTRIAL SCIENCE AND TECHNOLOGY) 29 August 2019 (2019-08-29) entire text, all drawings | 1-13 |
| A | WO 2019/044336 A1 (UNIV. OF HYOGO) 07 March 2019 (2019-03-07) entire text, all drawings | 1-13 |
| A | WO 2020/013325 A1 (THE UNIV. OF TOKYO) 16 January 2020 (2020-01-16) entire text, all drawings | 1-13 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 February 2024** | **27 February 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

INTERNATIONAL SEARCH REPORT
Information on patent family members

International application No.

**PCT/JP2023/044309**

| Patent document cited in search report | | | Publication date (day/month/year) | Patent family member(s) | | | Publication date (day/month/year) |
|---|---|---|---|---|---|---|---|
| JP | 2020-42165 | A | 19 March 2020 | US<br>entire text, all drawings<br>CN | 2020/0080833<br><br>110887820 | A1<br><br>A | |
| WO | 2022/054305 | A1 | 17 March 2022 | EP<br>entire text, all drawings<br>CN<br>KR<br>US | 4194923<br><br>116194818<br>10-2023-0065276<br>2023/324296 | A1<br><br>A<br>A<br>A1 | |
| JP | 2019-124679 | A | 25 July 2019 | WO | 2019/138685 | A1 | |
| JP | 2019-144121 | A | 29 August 2019 | (Family: none) | | | |
| WO | 2019/044336 | A1 | 07 March 2019 | US<br>entire text, all drawings<br>EP | 2020/0264559<br><br>3677969 | A1<br><br>A1 | |
| WO | 2020/013325 | A1 | 16 January 2020 | US<br>entire text, all drawings<br>EP<br>CN | 2023/0010572<br><br>3822685<br>112771432 | A1<br><br>A1<br>A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017219826 A
- US 10215697 B